# EUROPEAN PATENT SPECIFICATION

(11) **EP 0 718 066 B1**
(45) Date of publication and mention of the grant of the patent: **03.03.1999**
(21) Application number: 95308721.0
(22) Date of filing: 04.12.1995
(51) Int. Cl.: B23H 7/06, B23H 7/04

(54) **Numerical control apparatus for wire-cut electric discharge machine**
Numerische Steuerungsvorrichtung für Funkenerosionsschneiddrahtmaschine
Appareil de commande numérique pour machine d'usinage par électroérosion à fil

(30) Priority: 19.12.1994 JP 314610/94
(43) Date of publication of application: 26.06.1996
(73) Proprietor: FANUC LTD., Minamitsuru-gun, Yamanashi 401-05 (JP)
(72) Inventor: Masuda, Teruo, Oshinomura, Minamitsuri-gun, Yamanashi (JP); Tsuboguchi, Yuji, Oshinomura, Minamitsuru-gun, Yamanashi (JP)
(74) Representative: Brunner, Michael John

(56) References cited:
- EP-A- 0 286 685
- EP-A- 0 378 278
- EP-A- 0 581 968

## Description

The present invention relates to a numerical control apparatus for wire-cut electric discharge machine, and more specifically, to a numerical control apparatus for wire-cut electric discharge machine for providing control data of electric discharge conditions of a machining power unit which is important for a wire-cut electric discharge machine to realize high speed and highly accurate machining.

Since a wire-cut electric discharge machine effects machining by applying discharge energy between a wire and a workpiece, the most important matter for realizing the high speed and highly accurate machining is to control a discharge state of a machining power unit so that the discharge state between the wire and the workpiece is optimized. To keep an optimum discharge state at all times, there are a method of monitoring the discharge state in real time and controlling conditions of the machining power unit and a feed rate of the discharge machine based on the change of the discharge state and a method of controlling discharge conditions based on the geometrical feature of a machining shape which is determined by a shape command from a machining program. Actually, control is carried out by combining these two methods in a complex manner.

Since a conventional numerical control apparatus for wire-cut electric discharge machine cannot directly find the discharge state of a machining power unit, the apparatus gets the data of the discharge state from the machining power unit. The data is a feed rate command pulse input from the machining power unit based on a difference of electric potential between a wire and a workpiece, and the numerical control apparatus has a function for controlling a speed override by monitoring how the feed rate command pulse changes, a function for controlling discharge conditions based on a machining shape, and the like. For example, when the speed command pulse is abruptly lowered, since a machining state is made unstable, the numerical control apparatus effects control for reducing the feed rate until the machining state is stabilized by reducing a feed rate override. Further, since the numerical control apparatus calculates a wire diameter compensating path by itself, the apparatus previously recognizes a shape being machined. Thus, when a machining state is made unstable, the numerical control apparatus effects control for easing discharge conditions based on the recognized machining shape.

Further, as a recent tendency, since the machining power unit is provided with a processor, monitors a discharge state by itself and controls discharge conditions based on the discharge state, the numerical control apparatus does not take part in the control of the discharge conditions of the machining power unit.

Since a conventional control carried out by the numerical control apparatus based on a discharge state requires an interface for minutely monitoring the discharge state of the machining power unit, the interface is liable to have a fairly complicated arrangement. Further, since an interface to the machining power unit, control algorithm and the like entirely depend upon the specification of the machining power unit, the interface to the machining power unit is fixedly arranged, and thus the flexibility of the numerical control apparatus is lost. Since the numerical control apparatus carries out calculation in the control based on the discharge state of the machining power unit, the interface is made more complicated when the control is to be carried out in real time. To cope with this problem, the control based on the discharge state is mainly carried out in such a manner that the machining power unit is provided with a processor to monitor a discharge state and control discharge conditions by itself as a recent tendency.

On the other hand, since the control based on a machining shape needs machining shape data determined from the shape command of the machining program, control is mainly carried out by the numerical control apparatus. However, since an interface between the machining power unit and the numerical control apparatus, control algorithm and the like entirely depend on the specification of the machining power unit also in this case, a dedicated interface to enable the numerical control apparatus to control conditions in accordance with the specification of the machining power unit is required, and thus the flexibility of the numerical control apparatus is lost and an extra labor is needed for development.

Further, there is a problem that although control must be carried out by combining the control based on the discharge state and the control based on the machining shape in a complex manner, when these controls are independently carried out by the machining power unit and the numerical control apparatus, it is difficult to balance both the machining power unit and the numerical control apparatus and sometimes the controls compete with each other with a result of a negative effect.

An object of the present invention is to provide a numerical control apparatus for a wire-cut electric discharge machine capable of providing such a function with a machining power unit that the machining power unit can receive data necessary to integrally carry out control based on a discharge state and control based on a machining shape.

To achieve the above object, there is provided a numerical control apparatus for a wire-cut electric discharge machine for outputting data necessary to control discharge conditions to the machining power unit of the wire-cut electric discharge machine so as to optimize a discharge state between a wire and workpiece, characterised by:
machining shape data output means including means for determining from a shape command of a machining program, machining shape data to be used when said discharge conditions are controlled, wherein the machining shape data is the corner angle of an acute angle corner formed by continuous two cutting feed command blocks and the radius of a circle in a wire diameter compensating path in a circular arc command block, and means for outputting said machining shape data to said machining power unit prior to the execution of actual machining.

According to the above arrangement, the numerical control apparatus previously reads a block several blocks ahead of the block being executed at present and calculates a wire diameter compensating path and previously outputs the shape of a corner portion of a subsequent corner portion to the machining power unit in terms of a numerical value specifically expressing the shape of the corner portion by an angle or radius so that the machining power unit can previously calculate a parameter for controlling the corner portion.

The above and other objects, features and advantages of the present invention will become apparent from the following description when taken in conjunction with the accompanying drawings which illustrate preferred embodiments of the present invention by way of example.
FIG. 1 is a block diagram showing the principle of the present invention;
FIG. 2 is a view explaining a corner angle of machining shape data;
FIG. 3 is a view explaining a circular radius of machining shape data;
FIG. 4 is a time chart showing an example of reading machining shape data;
FIG. 5 is a view explaining a minute circular corner portion with an acute angle;
FIG. 6 is a view explaining an edge corner portion; and
FIG. 7 is a block diagram showing a schematic arrangement of the hardware arrangement of a numerical control apparatus for a wire-cut electric discharge machine.

An embodiment of the present invention will be described below with reference to the drawings.

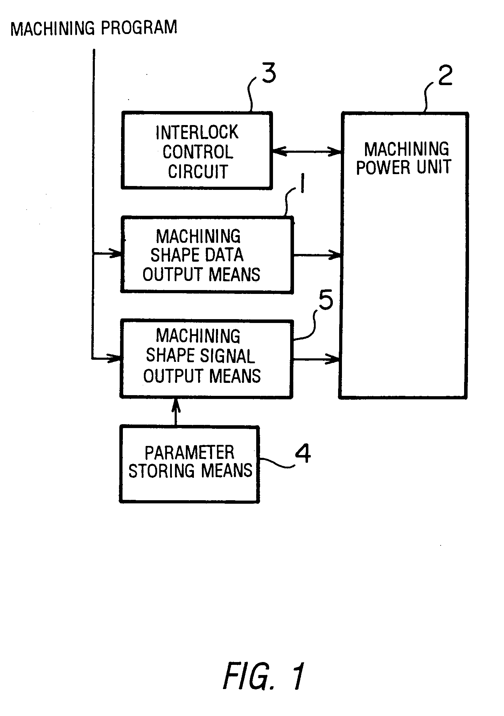

FIG. 1 is a block diagram showing the principle of the present invention. According to FIG. 1, a numerical control apparatus for wire-cut electric discharge machine of the present invention is composed of a machining shape data output means 1 for outputting machining shape data to a machining power unit 2 based on a machining program, an interlock control means 3 for interlocking the execution of a next block until the completion of the reading of machining shape data is returned after the machining power unit 2 is requested to read the machining shape data, a parameter storing means 4 for preparing parameters for determining machining shapes, and a machining shape signal output means 5 for outputting the geometric feature of the machining shape at a position where a wire electrode carrying out machining is located in real time to the machining power unit 2.

The machining shape data output means 1 determines machining shape data serving as parameters such as a corner angle of a path of a block with a path of the next block, a circular radius in a circular arc command block, and the like used to control the discharge conditions of the machining power unit 2 when a wire diameter compensating path is calculated based on a shape command of the machining program. Then, machining shape data output means 1 outputs the machining shape data to the machining power unit 2 before machining is actually carried out in the execution of a block.

The interlock control means 3 outputs a signal requesting the machining power unit 2 to read the machining shape data when the machining shape data output means 1 outputs the machining shape data to the machining power unit 2. At the time, the execution of the next block is interlocked in the numerical control apparatus until a signal indicating that the machining shape data has been read is returned from the machining power unit 2. This is because of that if the next block is started before the machining power unit 2 has read the output machining shape data, a timing at which control is to be carried out is missed.

The machining shape signal output means 5 determines a machining shape based on the parameters stored in the parameter storing means 4 and outputs the geometric feature of the machining shape at the position where the wire electrode carrying out machining is located, i.e. a signal indicating a straight line, circular arc, acute angle corner, minute circle, irregularities at a corner, and the like to the machining power unit 2 in real time.

The machining power unit 2 controls the discharge conditions and the like thereof according to predetermined algorithm based on the machining shape data and machining shape signal output from the machining shape data output means 1 and machining shape signal output means 5 of the numerical control apparatus. With this arrangement, and an interface between the numerical control apparatus and the machining power unit 2 of the wire-cut electric discharge machine can be made flexible as well as complex control of a higher level can be realized.

An angle at an acute angle corner and a circular radius of a circular arc command block are essential as machining shape data for the machining power unit 2 to control the discharge conditions and the like and almost all the control based on a machining shape can be controlled by these two types of the machining shape data.

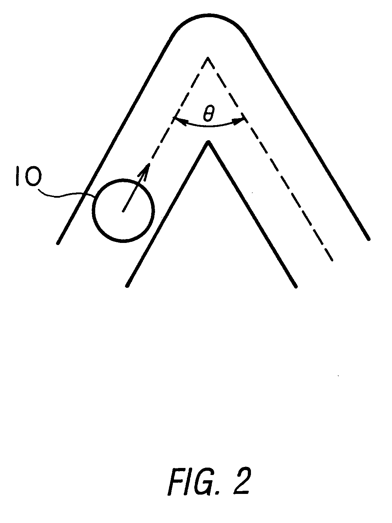

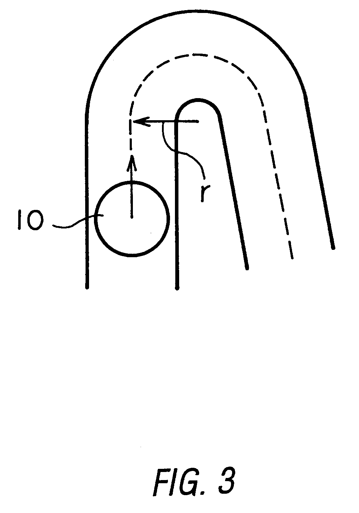

FIG. 2 is a view explaining a corner angle of machining shape data and FIG. 3 is a view explaining a circular radius of machining shape data. In these drawings, numeral 10 denotes a wire and a dotted line passing through the center of the wire 10 shows a wire diameter compensating path.

As shown in FIG. 2, the corner angle θ of the machining shape data is an angle determined by two continuous cutting feed command blocks. The circular radius r of the machining shape data is a radius of a circular path along which the wire 10 advances at a circular corner as shown in FIG. 3.

The numerical control apparatus carries out a preprocessing when it executes a program. In the preprocessing, the numerical control apparatus internally reads previously a block located several blocks ahead of the block being executed at the time so as to previously get a wire diameter compensating path by executing the calculation of offset and the like. That is, when offset is calculated at the time the wire diameter compensating path is to be determined, the corner angle θ of the acute corner and the circular radius r of the circular corner have been calculated before the block is actually executed. They are output to the machining power unit 2 of the wire-cut electric discharge machine in advance as machining shape data.

In the wire-cut electric discharge machine, since machining is unstably carried out at a corner where a machining direction is to be changed, breaking of a wire and an inadequate machining accuracy are liable to be caused there. To cope with this problem, the machining power unit 2 changes discharge conditions before machining operation approaches the corner. The change of the discharge conditions is controlled based on machining shape data previously input from the numerical control apparatus.

A reading request signal is output to the machining power unit 2 when the machining shape data is output to the machining power unit 2. That is, a corner angle reading request signal is output with respect to the data of the corner angle θ and a circle radius reading request signal is output with respect to the data of the circle radius r. At the time, the numerical control apparatus interlocks the execution of the next block until a reading completion signal is input from the machining power unit 2.

More specifically, when a machining shape is, for example, the acute corner shown in FIG. 2, the corner angle θ has been calculated during the block is executed on the assumption that the wire 10 advances toward the corner and the corner angle θ is output to the machining power unit 2 at a position forwardly of the corner by a predetermined distance such as, for example, at the position shown in FIG. 2 where parameters are set. At the time, the corner angle reading request signal is also output. The machining power unit 2 reads the corner angle θ in response to the corner angle reading request signal and previously calculates control parameter on the side of the machining power unit 2 at the point where machining is shifted from the end of the present block to the next block. On completion of the calculation, the machining power unit 2 returns a reading completion signal to the numerical control apparatus. When the reading completion signal is returned to the numerical control apparatus, the numerical control apparatus releases the interlock and enables the next block to be executed.

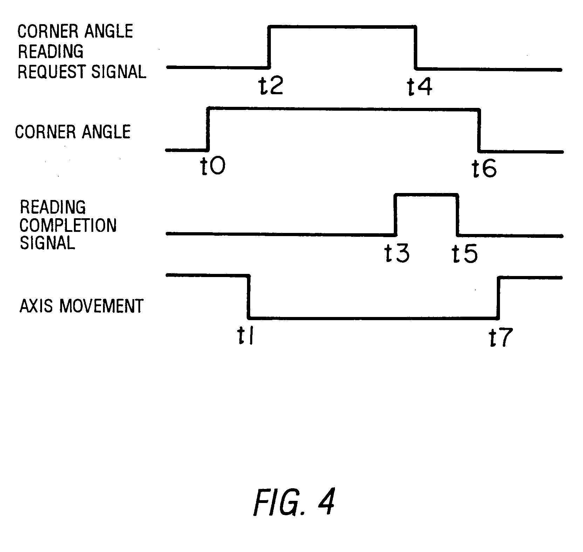

FIG. 4 is a time chart showing an example of the reading of machining shape data. This example shows a case for reading the data of an acute corner angle. In FIG. 4, the corner angle is calculated in the process of calculating the offset of the next block and previously output at a time t0. When a moving command block is executed and reaches the end point (interchanging point of the blocks) thereof (t1), a corner reading request signal is output (t2). Thereafter, when the corner angle is normally read, a reading completion signal is returned (t3). With this operation, the corner reading request signal is finished (t4) and then the reading completion signal is finished (t5). Next, the output of the corner angle is completed (t6) so that the execution of the next block is enabled (t7).

Note, a circle radius reading request signal is output at the beginning of the circular arc command block.

The numerical control apparatus further outputs a machining shape signal indicating a machining shape at the position of the wire actually in machining operation to the machining power unit 2 in real time. The machining shape is classified into several patterns, i.e. a straight line portion, circular portion and corner portion. The corner portion is further classified into seven types of corners depending upon their shapes. They are an acute corner portion, convex acute corner portion, small circular portion, convex small circular portion, acute angle minute circular corner portion, edge corner portion, and an "amount of movement 0" corner portion.

The straight line portion is determined based on a moving command block in the G01 mode of a preparation function. That is, since the numerical control apparatus includes straight line type interpolation data therein to carry out an interpolation processing, the numerical control apparatus determines the straight line portion based on the data. When the straight line portion is machined, a straight line portion machining signal is output to the machining power unit 2 as a machining shape signal.

The circular portion is determined based on a moving command block in the G02 and G03 modes of the preparation function and a corner portion. That is, since the numerical control apparatus has circle type interpolation data therein to carry out an interpolation processing, the numerical control apparatus determines the circular portion based on the data. When the circular portion is machined, a circular portion machining signal is output to the machining power unit 2 as a machining shape signal.

The corner portion is a case in which a machining shape corresponds to any one of the following shapes. When the corner portion is machined, a corner portion machining signal is output to the machining power unit 2 as a machining shape signal. At the same time, a signal showing the following corner shapes is also output as a machining shape signal.

The acute angle corner portion is defined a case in which the external angle of a corner formed by two continuous cutting feed command blocks is greater than a set value of a parameter which is previously set for the determination of a shape. That is, when the corner angle of the corner portion is expressed by θ as shown in FIG. 2 and a parameter is set to a value P1, if (π - θ) > P1, the corner is determined to be an acute angle corner portion. When the acute angle corner portion is machined, an acute angle corner machining signal is output together with a corner portion machining signal. Note, when at least one of the two continuous cutting feed command blocks is a circular arc command block, the corner angle θ is determined from the tangent lines at the beginning/end points of the circular arc command block.

The convex acute angle corner portion is defined as an acute angle corner portion of a workpiece which is machined to a convex shape. That is, when an acute angle corner is formed by the angle formed by two continuous wire diameter compensating paths, a convex corner and a concave corner can be obtained. A machining shape described here is the convex corner. When the convex acute angle corner portion is machined, a convex acute corner portion machining signal is output together with a corner portion machining signal.

The small circular portion is defined as such a case that the radius of a wire diameter compensating path of a circular arc command block by the G02 and G03 commands of the preparation function or a corner command is smaller than the value set by a parameter previously determined for the determination of a machining shape. That is, when circle radius of a circular portion is expressed by r as shown in FIG. 3 and a parameter is set to a value P2, if r ≦ P2, the circular portion is determined to be the small circular portion. When the small circular portion is machined, a small circular portion machining signal is output together with a corner portion machining signal.

The convex small circular portion is defined as a small circular portion of a workpiece which is machined to a convex shape. When the convex small circular portion is machined, a convex small circular portion machining signal is output together with a corner portion machining signal.

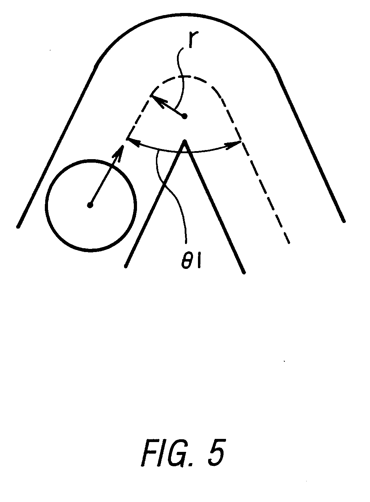

The acute angle minute circular corner portion is defined as such a case that the radius of a wire diameter compensating path of a circular arc command block by the G02 and G03 commands of the preparation function or a corner command is smaller than the value of a parameter previously set for the determination of a machining shape, and the external angle of the angle formed by two blocks located before and behind the circular arc command block is greater than the value of a parameter previously set for the determination of a machining shape. This will be explained with reference to FIG. 5.

FIG. 5 is a view explaining the minute circular corner portion with an acute angle. When it is assumed that the radius of the wire diameter compensating path of a circular arc command block is expressed r, the angle formed by two blocks before and behind the circular arc command block is expressed by θ 1, the values set to parameters are expressed by P3 and P4, if r ≦ P3, and also, θ 1 ≦ (π - P4), the corner portion is determined to be the acute angle minute circular corner. When the acute angle minute circular corner is machined, an acute angle minute circular corner portion machining signal is output together with a corner portion machining signal.

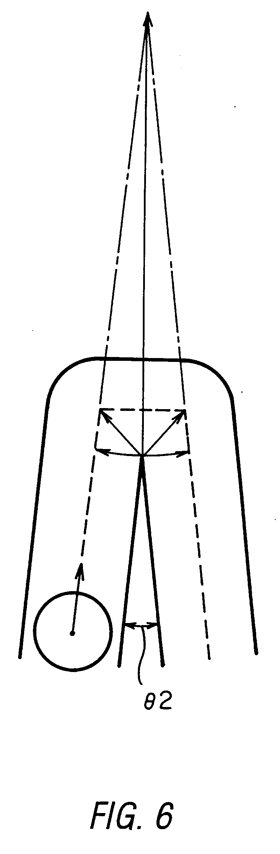

The edge corner portion is defined as such a case that a wire diameter compensating vector has an magnitude of, for example, at least sixteen times the amount of a wire diameter compensation. This will be explained with reference to FIG. 6.

FIG. 6 is a view explaining the edge corner portion. As shown in FIG. 6, when a convex acute angle corner portion has an angle θ 2 which is equal to or less than 7° , a path shown by a dot-dash-line is obtained and a wire diameter compensating vector directed from the apex of the acute angle to the turning point of the path (block interchanging point) has a magnitude of at least sixteen times the amount of a wire diameter compensation. When a path such as those in the acute angle corner portion or the convex acute angle corner portion is set in this machining shape, machining will be uselessly carried out. Therefore, In such a case, a plurality of vectors may be made by a special calculation method to create a path along which the wire moves near the extreme end of the corner. The machining shape in this case is defined as the edge corner portion. When the edge corner portion is machined, an edge corner portion machining signal is output together with a corner portion machining signal.

The "amount of movement 0" corner portion defines a machining shape by a block whose amount of movement is zero. The "amount of movement 0" block indicates:
(1) a case that since an amount of wire diameter compensation is greater than a corner radius, the "amount of movement 0" is achieved by an interference check,
(2) a case that since a circle radius is equal to an amount of wire diameter compensation, the "amount of movement 0" of a circular arc command block is achieved after compensation,
(3) a case that the "amount of movement 0" of a straight line command block is achieved by the calculation of wire diameter compensation,
(4) a case that a plurality of blocks without a movement command are continuously commanded,
(5) a block with a movement command of the "amount of movement 0", and
(6) a program end point.

When the "amount of movement 0" corner is machined, an "amount of movement 0" corner portion machining signal is output together with a corner portion machining signal.

The above four parameters P1 to P4 are preset as parameters necessary to determine machining shapes. Further, when the acute angle corner portion, small circular portion, acute angle minute circular corner portion, edge corner portion and "amount of movement 0" corner portion are to be determined, the range of each of these portions is set by different parameters. That is, there are provided a parameter P5 by which a former half distance of a corner portion is determined before the interchanging point of two continuous moving command blocks and a parameter P6 by which a latter half distance of the corner portion is determined just behind the interchanging point of the two continuous moving command blocks. The range of the corner portion is set by these two parameters and discharge conditions such as the reduction of a machining feed rate, and the like are changed in the range.

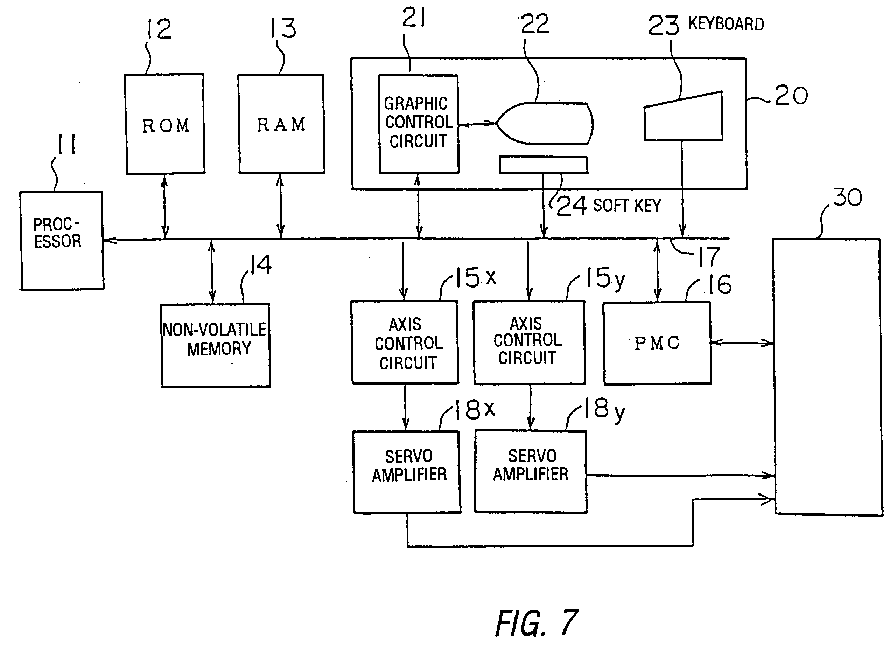

FIG. 7 is a block diagram showing a schematic arrangement of the hardware arrangement of a numerical control apparatus for wire-cut electric discharge machine.

The numerical control apparatus has a processor 11 for controlling the numerical control apparatus as a whole. A read only memory (ROM) 12, a random access memory (RAM) 13, a non-volatile memory 14, axis control circuits 15x and 15y for the servomotors for X- and Y-axes and a programmable machine controller (PMC) 16 are interconnected to the processor 11 through a bus 17. The axis control circuits 15x, 15y are connected to a wire-cut electric discharge machine 30 through servoamplifiers 18x, 18y. The programmable machine controller 16 is also connected to the wire-cut electric discharge machine 30. The numerical control apparatus also includes a CRT/MDI (cathode ray tube/manual data input) unit 20 which is composed of a graphic control circuit 21, a display unit 22, a keyboard 23 and a soft key 24. Among them, the graphic control circuit 21, the keyboard 23 and the soft key 24 are connected to the bus 17.

The processor 11 controls the numerical control apparatus as a whole according to a system program stored in the read only memory 12. The random access memory 13 stores temporary calculation data such as machining shape data, display data, input/output signals and the like. The non-volatile memory 14 is backed up by a battery (not shown) and stores various data such as parameters, machining programs, various data and the like which are to be retained after the power unit is turned off.

The CRT/MDI unit 20 is disposed on the front surface of the numerical control apparatus and used to display data and machining graphics, to input data and to operate the numerical control apparatus. The graphic control circuit 21 converts digital signals such as numerical data, graphic data and the like into raster signals for display and supplies them to the display unit 22. The display unit 22 displays these numerical values and graphics.

The keyboard 23 is composed of numerical keys, symbolic keys, character keys and function keys, and it is used to create and edit programs, to input parameters and amounts of offset and to operate the numerical control apparatus. The soft key 24 is disposed below the display unit 22 and the functions thereof are displayed on the display unit 22. When a screen of the display unit 22 is changed, the functions of the soft key 24 are also changed in correspondence with the displayed functions.

The axis control circuits 15x, 15y receive an axis movement command from the processor 11 and output axis movement commands to the servoamplifiers 18x, 18y. The servoamplifiers 18x, 18y amplify the movement commands and drive the X-axis servomotor and Y-axis servomotor of an XY table provided in the wire-cut electric discharge machine 30. Note, axis control circuits for U- and V-axes servomotors and servoamplifiers used to control a wire guide when taper machining is carried out are not shown in FIG. 7.

The programmable machine controller 16 is interposed between the numerical control apparatus and the wire-cut electric discharge machine 30 and includes a read only memory for storing sequence programs, corner control programs and the like and a random access memory for executing calculation and temporarily storing data in addition to a processor. Machining shape data and machining shape signals output from the numerical control apparatus are not directly supplied to the machining power unit but actually supplied thereto through the programmable machine controller 16. Therefore, the programmable machine controller 16 receives machining shape data, machining shape signals, reading request signal, etc. from the processor 11 of the numerical control apparatus through the bus 17 and returns a reading completion signal to the processor 11 in response to them. The machining shape data and machining shape signals received from the numerical control apparatus are delivered to the processor of the machining power unit after having being suitably processed by the programmable machine controller 16 or without being processed. Further, programmable machine controller 16 controls an amount of machining water of the wire-cut electric discharge machine 30, carries out a sequence processing by receiving signals such as a button signal, switch signal, limit switch signal, and the like of the machine control console of the wire-cut electric discharge machine 30 and transfers necessary input signals to the processor 11 through the bus 17.

The processor 11 is described as a single processor in the above arrangement. It may be arranged as a multiprocessor by employing a plurality of processors.

As described above, the present invention is arranged such that machining shape data serving as parameters when discharge conditions are controlled is determined based a shape command of a machining program, the machining shape data is output to the machining power unit prior to the execution of actual machining and further a machining shape signal expressing a machining shape at the position where a wire electrode carrying out machining operation is located is output to the machining power unit in real time. With this arrangement, an interface between the numerical control apparatus and the wire-cut electric discharge machine can be made flexible as well as the wire-cut electric discharge machine can be under a high level complex control composed of control effected by a discharge state and control effected by a machining shape.

## Claims

1. A numerical control apparatus for a wire-cut electric discharge machine for outputting data necessary to control discharge conditions to the machining power unit (2) of the wire-cut electric discharge machine so as to optimize a discharge state between a wire and workpiece, characterised by:
machining shape data output means (1) including means for determining from a shape command of a machining program, machining shape data to be used when said discharge conditions are controlled, wherein the machining shape data is the corner angle of an acute angle corner formed by continuous two cutting feed command blocks and the radius of a circle in a wire diameter compensating path in a circular arc command block, and means for outputting said machining shape data to said machining power unit prior to the execution of actual machining.

2. A numerical control apparatus for a wire-cut electric discharge machine according to claim 1, further comprising interlock control means (3) for interlocking the execution of a next block and outputting a request for reading machining shape data to said machining power unit (2) when said machining shape data output means (1) outputs the machining shape data as well as releasing said interlock in response to a reading completion signal from said machining power unit (2).

## Patentansprüche

1. Numerische Steuerungsvorrichtung für eine Drahtfunken-Erosionsschneidmaschine zur Ausgabe der zur Regelung der Funkenentladung nötigen Daten an eine Bearbeitungsantriebseinheit (2) der Drahtfunken-Erosionsschneidmaschine so, daß der Entladungszustand zwischen einem Draht und einem Werkstück optimiert wird, gekennzeichnet durch
Bearbeitungsprofildaten-Ausgabemittel (1), welche Mittel zum Bestimmen eines Profilbefehls aus einem Bearbeitungsprogramm umfassen,
Bearbeitungsprofildaten, die zur Regelung der Funkenentladung dienen, wobei die Bearbeitungsprofildaten der Eckenwinkel einer bogenförmigen Winkelecke sind, welche zusammenhängend von zwei Schneidvorschubsbefehlsblöcken und dem Kreisradius einer den Drahtdurchmesser kompensierenden Bahn eines Kreisbogenbefehlsblockes gebildet wird, und
Mittel zur Ausgabe der Bearbeitungsprofildaten an die Bearbeitungsantriebseinheit, bevor die aktuelle Bearbeitung ausgeführt wird.

2. Numerische Steuerungsvorrichtung für eine Drahtfunken-Erosionsschneidmaschine nach Anspruch 1, gekennzeichnet durch Sperrsteuermittel (3), um die Ausführung eines nächsten Blockes zu sperren und eine Anforderung zum Lesen der Bearbeitungsprofildaten an die Bearbeitungsantriebseinheit (2) auszugeben, wenn die Bearbeitungsprofildaten-Ausgabemittel (1) sowohl die Bearbeitungsprofildaten als auch eine Freigabe der Sperre als Reaktion auf ein Leseschlußsignal der Bearbeitungsantriebseinheit (2) ausgegeben haben.

## Revendications

1. Appareil de commande numérique pour une machine à fil d'usinage par électro-érosion, pour délivrer des données nécessaires pour commander les conditions de décharge, à l'unité (2) de fourniture d'énergie d'usinage de la machine à fil d'usinage par électro-érosion, de façon à optimiser un état de décharge entre un fil et une pièce, caractérisé par
des moyens (1) pour délivrer des données de forme d'usinage comprenant des moyens pour déterminer, à partir d'un ordre de forme d'un programme d'usinage, des données de forme d'usinage à utiliser lorsque lesdits conditions de décharge sont commandées, dans lequel les données de forme d'usinage sont l'angle d'un coin à angle aigu formé par deux blocs d'ordre d'avancement continu de la coupe et le rayon d'un cercle dans un trajet de compensation pour le diamètre du fil, dans un bloc d'ordre d'arc circulaire, et des moyens pour délivrer lesdites données de forme d'usinage à ladite unité de fourniture d'énergie d'usinage avant l'exécution de l'usinage effectif.

2. Appareil de commande numérique pour une machine à fil d'usinage par électro-érosion selon la revendication 1, comprenant de plus des moyens (3) de commande de blocage pour bloquer l'exécution d'un bloc suivant et délivrer une requête en vue de lire des données de forme d'usinage, à ladite unité (2) de fourniture d'énergie d'usinage, lorsque lesdits moyens (1) de délivrance de données de forme d'usinage délivrent les données de forme d'usinage, et libérant le blocage en réponse à un signal d'achèvement de la lecture provenant de ladite unité (2) de fourniture d'énergie d'usinage.
